# EUROPEAN PATENT SPECIFICATION

(11) **EP 3 450 336 B1**
(45) Date of publication and mention of the grant of the patent: **19.02.2020**
(21) Application number: 18193374.8
(22) Date of filing: 03.11.2017
(51) Int. Cl.: B65B 59/04, B65B 51/14, B65B 9/207, B65B 9/20, F16J 15/46, B65B 61/24, B65B 65/00, B65B 51/30

(54) **MACHINE FOR FORMING AND FILLING A CONTAINER FOR POURABLE PRODUCTS**
MASCHINE ZUM FORMEN UND FÜLLEN VON BEHÄLTERN FÜR FLIESSFÄHIGE PRODUKTE
MACHINE PERMETTANT DE FORMER ET DE REMPLIR UN RÉCIPIENT POUR PRODUITS VERSABLES

(30) Priority: 03.11.2016 IT 201600110503
(43) Date of publication of application: 06.03.2019
(62) Divisional of application: 17199957.6
(73) Proprietor: G.D SOCIETA' PER AZIONI, 40133 Bologna (IT)
(72) Inventor: CARBONI, Salvatore, 40135 BOLOGNA (IT); GANDOLFI, Luca, 40132 BOLOGNA (IT); VITALI, Antonio, 40062 MOLINELLA (IT); BIONDI, Andrea, 40133 BOLOGNA (IT)
(74) Representative: Frontoni, Stefano

(56) References cited:
- WO-A1-2009/060254
- DE-A1-102010 026 336
- DE-U1-202013 000 333
- JP-B2- 3 319 671
- US-A- 3 694 962
- US-A1- 2010 247 388

## Description

### TECHNICAL FIELD

The present invention relates to a machine for forming and filling a container for pourable products.

### PRIOR ART

For many years, containers (disposable or re-closable) have been available on the market, which are made by bending and sealing a multilayer wrapping sheet (that is, formed by layers of different materials coupled together) and are used for the distribution of pourable products (i.e. fluid products being formless and therefore taking the form of the object containing them, said fluid products can be liquid, powdery, granular or semi-solid). These containers can generally be used for the distribution of foodstuff products (for example wine, milk, fruit juices, syrups, drinks, sauces, creams, yoghurt, purée, preserved products, vegetables, legumes, canned tomatoes...).

By way of example, the multilayer wrapping sheet is formed by an outer layer made of transparent polyethylene (heat-sealable as it melts at relatively low temperatures), a subsequent structural layer made of cardboard, a subsequent aluminium barrier layer, and an inner layer made of transparent polyethylene (heat-sealable as it melts at relatively low temperatures).

A common container for pourable products has a parallelepiped shape and has four side walls (two by two parallel and opposite each other) and two bottom walls, upper and lower, respectively, which are perpendicular to the four side walls. The container comprises a longitudinal seal and two cross seals, each of which is arranged at a respective bottom wall and has a sealing fin which is initially perpendicular to the respective bottom wall and is subsequently folded against the bottom wall by 90°; each bottom wall has at its ends two triangular wings (also called "ears") which can be folded against respective side walls or against the bottom wall itself. Typically, the triangular wings at the upper bottom wall are folded against respective side walls (and fixed to the side walls by means of heat-sealing) while the triangular wings at the lower bottom wall are folded against the lower bottom wall itself (and fixed to the lower bottom wall by means of heat-sealing).

For example, patent application EP1683722A1 describes a machine for forming and filling a container for pourable products by bending and heat-sealing a wrapping sheet (previously provided with pre-weakened folding lines) which is part of a strip of wrapping material (wound in a reel). The vertically arranged wrapping sheet is bent in a tube thus overlapping two opposed longitudinal edges which are heat-sealed on one another by means of a longitudinal seal and then a dose of pourable product is fed into the tube; finally, the tube is closed at the upper and lower part by means of two respective cross seals (which form two corresponding sealing fins having the four triangular wings) thus causing the forming of the container which initially has a *"cushion-like"* shape. Simultaneously with the forming of the seals, the wrapping sheet is cut crossly to separate the wrapping sheet from the strip of wrapping material (i.e. the *"cushion-like"* shaped container is formed by the bent and sealed wrapping sheet) .

At the same time or later with the forming of the cross seals, the container can be shaped (for example by means of a pair of hollow shells which compress the container between each other thus imposing a predefined shape to the container) to assume a definitive parallelepiped shape (as initially the container assumes on a *"cushion-like"* shape).
Once the container has been closed by means of the three seals (one longitudinal seal and two cross seals), the container is taken over by a transfer belt conveyor which inserts the container into a pocket of a folding drum, wherein initially the two sealing fins are folded against the respective bottom walls by 90° and then the four triangular wings are folded against the corresponding side walls and/or against the corresponding bottom walls and therefore fixed in the folded position by heat sealing.
Generally, known forming and filling machines of the type described above are not able to reach a high operating speed (measured as number of containers produced in the time unit) while maintaining a high bending quality, i.e. an extreme spatial precision in the execution of the bending and of the sealing (said extreme spatial precision is needed in order not to compromise the appearance of the more or less coloured prints at the areas in which different parts of the wrapping sheet, that was printed when it was completely extended are flanked).
The patent application EP0819612A1 describes a FFS (*"Form, Fill & Seal"*) packaging machine, wherein a strip of wrapping material is bent into a tube, is filled with respective product doses and is then heat-sealed in a cross direction to define and separate the individual packs.

DE202013000333U1 discloses prior art representing further technical background.

The patent application US2010247388A1 describes a sterilizer having a housing defining a sterilization chamber; an opening in the housing communicates with the chamber, a surface surrounds the opening, and a door is movable between one of an open position allowing access to the chamber through the opening and a closed position covering the opening. A seal element is associated with the surface for forming a fluid-tight seal between the door and the surface when the door is in the closed position; an operating system is provided for applying pressure to one side of the seal from a source external to the operating system to force the seal into engagement with the door.

Patent JP3319671B2 discloses a sealing structure of an airtight vessel.

Patent US3694962 discloses a sliding door sterilizer having a power operated seal means for sealing between the door closure and the sterilizer opening; the seat for the seal means is pressurized to move the seal against the door and the seat is evacuated to create a partial vacuum for drawing the seal away from the door closure.

Patent application DE102010026336A1 discloses a shaft sealing device for a compressor.

### DESCRIPTION OF THE INVENTION

The object of the present invention is to provide a machine for forming and filling a container for pourable products provided with a sealing device, which is interposed between a fixed part and a movable part so as to prevent the passage of fluid, ensures an excellent seal, and guarantees a very long service life before proceeding with the replacement of the gaskets.

According to the present invention, a machine for forming and filling a container for pourable products is provided, as claimed in the attached claims.

### BRIEF DESCRIPTION OF THE DRAWINGS

The present invention will now be described with reference to the accompanying drawings, which illustrate an example of nonlimiting embodiment, wherein:
- Figure 1 is a perspective view of a container for pourable products;
- Figure 2 is a plan view of a wrapping sheet which is bent and heat-sealed to make the container of Figure 1;
- Figure 3 is a perspective view of the container of Figure 1 during the construction thereof, i.e. before the folding of the sealing fins and of the respective triangular wings;
- Figure 4 is a schematic view and with parts removed for clarity of a forming and filling machine which forms and fills the container of Figure 1 and is made according to the present invention;
- Figure 5 is a front perspective view and with parts removed for clarity of a sealing unit of the forming and filling machine of Figure 4;
- Figure 6 is a rear perspective view and with parts removed for clarity of the sealing unit of Figure 5;
- Figures 7 and 9 are two different sectional views of part of the sealing unit of Figure 5;
- Figure 8 is an enlarged view of a detail of Figure 7;
- Figure 10 is a perspective view of a transfer conveyor and of a folding drum of the forming and filling machine of Figure 4; and
- Figures 11-15 are five perspective views of the transfer conveyor and of the folding drum of Figure 10 in five corresponding operating moments.

### PREFERRED EMBODIMENT OF THE INVENTION

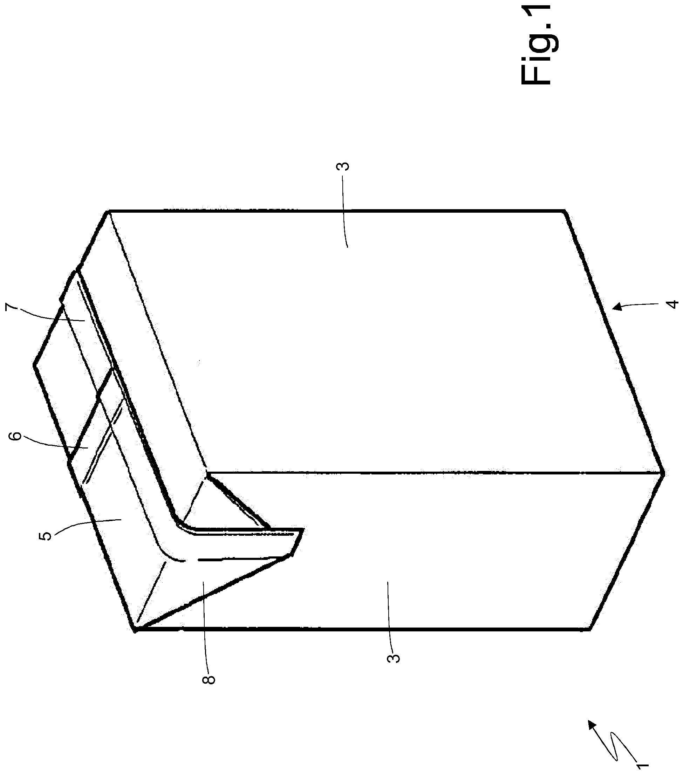

In Figure 1 number 1 denotes as a whole a container for pourable products that contains on the inside thereof a predetermined amount of a pourable product (i.e. a fluid product being formless and therefore can assume the form of the object containing it, such as a liquid, powdery, granular or semi-solid product). The container 1 is generally used for the distribution of foodstuff products (for example wine, milk, fruit juices, syrups, drinks, sauces, creams, yoghurt, purée, preserved products, vegetables, legumes, canned tomatoes ...).

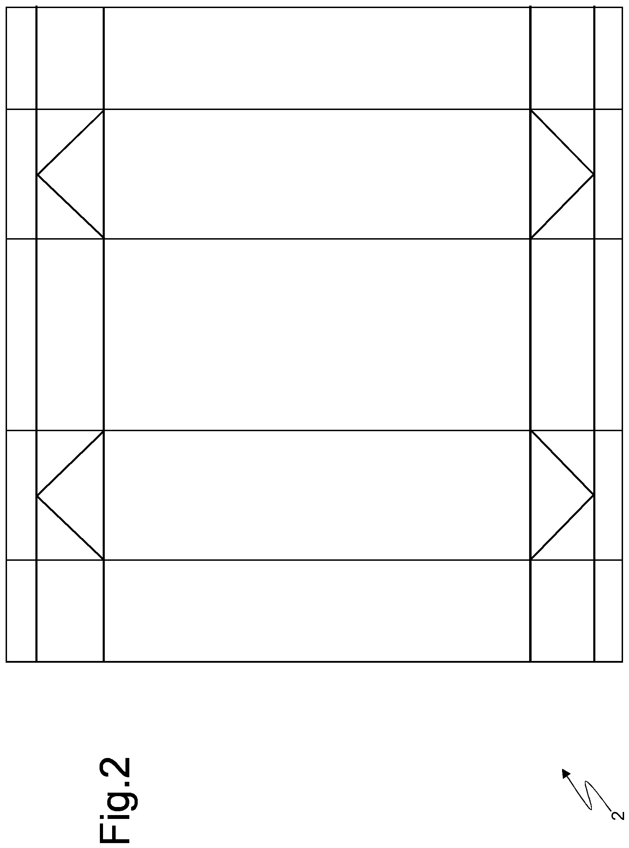

The container 1 is made by bending and sealing a multilayer wrapping sheet 2 (that is, obtained from layers of different materials coupled together) illustrated in Figure 2. According to a possible and non-binding embodiment, the wrapping sheet 2 is formed by an external layer made of transparent polyethylene (heat-sealable as it melts at relatively low temperatures), a subsequent structural layer made of cardboard, a subsequent barrier layer made of aluminium, and an inner layer of transparent polyethylene (heat-sealable as it melts at relatively low temperatures). According to a possible and non-binding embodiment, the wrapping sheet 2 is previously provided (typically by mechanical deformation performed with embossing rollers) with pre-weakened folding lines which guide the subsequent bending of the wrapping sheet 2 itself.

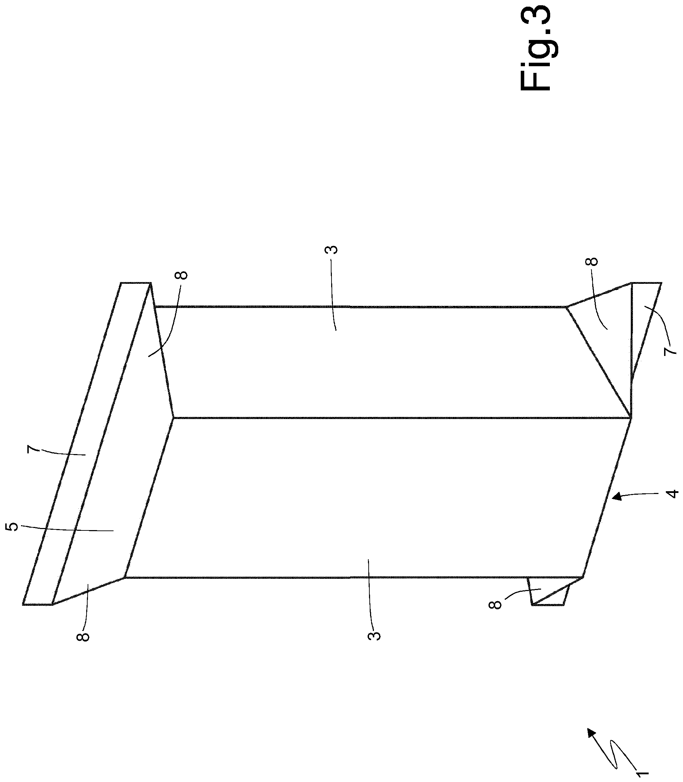

As illustrated in Figure 1, the container 1 has a parallelepiped shape and has four side walls 3 (two by two parallel and opposite each other) and two bottom walls 4 and 5 lower and upper, respectively, which are perpendicular to the four side walls 3. The container 1 comprises a longitudinal seal 6 and two cross seals 7, each of which is arranged at a respective bottom wall 4 or 5 and has a sealing fin which is initially perpendicular to the respective bottom wall 4 or 5 (as illustrated in Figure 3) and is then folded against the bottom wall 4 or 5 by 90° (as illustrated in Figure 1); each bottom wall 4 or 5 has at the ends of the same two triangular wings 8 (also called "ears") which can be folded against respective side walls 3 or against the bottom wall 4 or 5 itself. Typically, and as illustrated in Figure 1, the two triangular wings 8 of the upper bottom wall 5 are folded against respective side walls 3 (and fixed to the lateral walls 3 by means of heat-sealing) whereas the triangular wings 8 of the lower bottom wall 4 are folded against the lower bottom wall 4 itself (and fixed to the lower bottom wall 4 by means of heat-sealing).

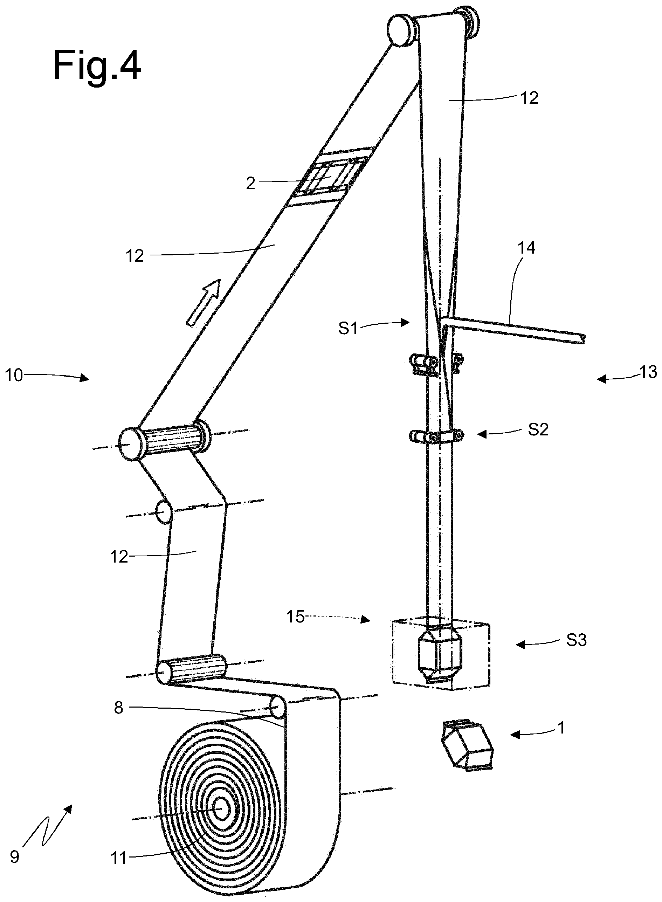

In Figure 4 number 9 denotes as a whole a forming and filling machine which forms and fills the container 1 illustrated in Figure 1 and described above.

The forming and filling machine 9 comprises a feeding conveyor 10 which unwinds a strip 12 of wrapping material containing a succession of wrapping sheets 2 from a reel 11. Downstream of the feeding conveyor 10 a filling conveyor 13 is arranged, which feeds the strip 12 of wrapping material through a bending station S1, in which the strip 12 of wrapping material is bent in a tubular shape and is provided with the longitudinal seal 6; in particular, in the bending station S1, two opposite longitudinal edges of the strip 12 of wrapping material are overlapped on one another and then heat-sealed one to the other. Furthermore, the filling conveyor 13 feeds the strip 12 of wrapping material bent in a tubular shape through a filling station S2, in which a product dose is fed into the strip 12 of wrapping material bent in a tubular shape (by using a feeding duct 14 which is coupled to the strip 12 of wrapping material upstream of the bending station S1 and eventuates at the filling station S2). Finally, the filling conveyor 13 feeds the strip 12 of wrapping material bent in a tubular shape through a sealing station S3 in which the strip 12 of wrapping material bent in a tubular shape is provided with two opposite cross seals 7 to define the container 1.

Simultaneously with the forming of the cross seals 7 (i.e. in the sealing station S3), the container 1 is separated from the strip 12 of wrapping material by means of a cross cut; alternatively, the cross cut instead of being simultaneous with the cross sealing could be performed after the cross sealing.

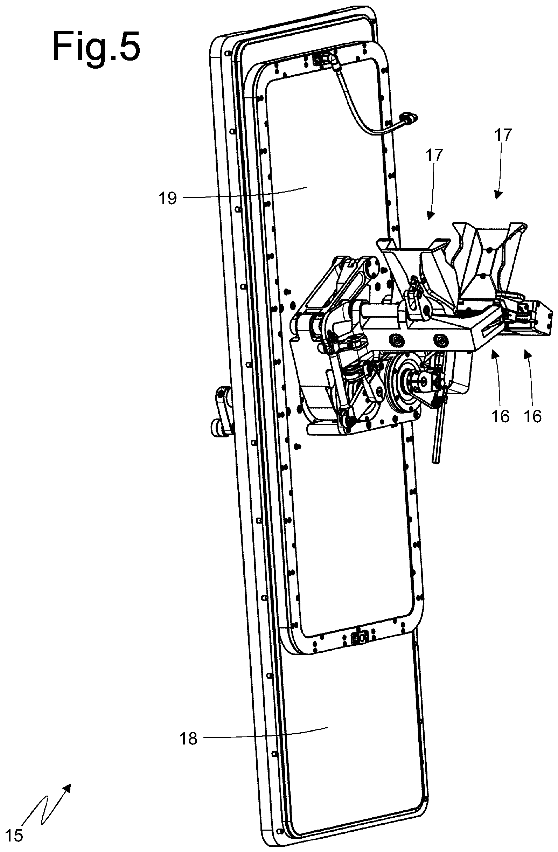

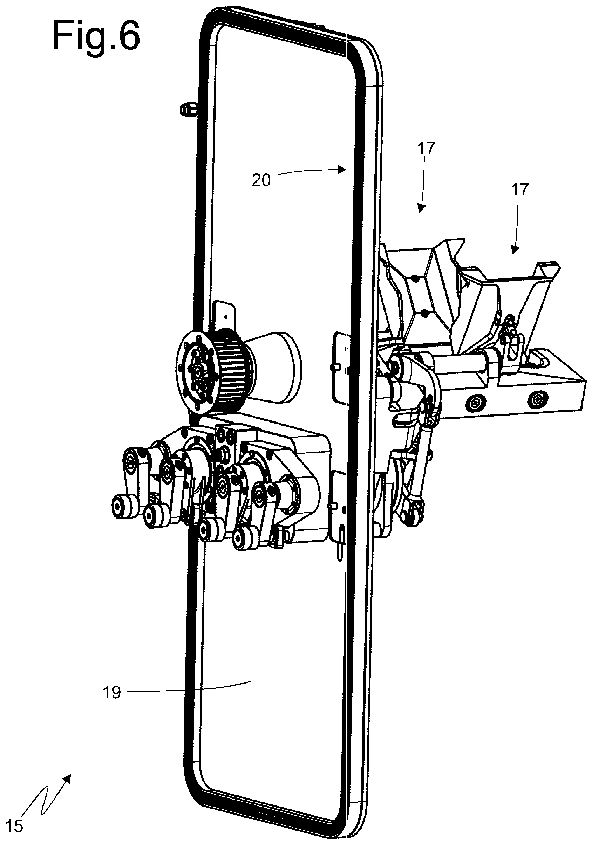

At the sealing station S3 a sealing unit 15 (schematically illustrated in Figure 4 and better illustrated in Figures 5 and 6) is arranged, which is provided with a pair of opposing induction sealing heads 16 which are cyclically pressed from opposite sides against the strip 12 of wrapping material bent in a tubular shape so as to clamp the strip 12 of wrapping material itself between them. The induction sealing heads 16 also support cutting elements to perform, together with the sealing, also the cross cutting of the strip 12 of wrapping material bent in a tubular shape. The sealing unit 15 also comprises a pair of hollow shells 17 which are movable together with the induction sealing heads 16 to embrace from opposite sides the strip 12 of wrapping material bent in a tubular shape so as to shape the strip 12 of wrapping material itself (i.e. in such a way as to give the strip 12 of wrapping material a definitive parallelepiped shape). In other words, together with the forming of the cross seals 7, the container 1 is shaped (by means of the pair of hollow shells 17 which compress the container 1 between them, thus imposing a predefined shape to the container 1) so as to assume a definitive parallelepiped shape (as initially the container 1 assumes a *"cushion-like"* shape).

As illustrated in Figures 5 and 6, the sealing unit 15 comprises a fixed part 18 rigidly mounted on the frame of the forming and filling machine 9 and a movable part 19 which, in use, moves relative to the fixed part 18 and is arranged facing the fixed part 18. In particular, the movable part 19 is formed by a slide which slides vertically relative to the fixed part 18 for example by means of the tracks obtained in the fixed part 18. In use, the movable part 19 cyclically slides back and forth (i.e. up and down) cyclically making a working stroke, along which the cross sealing of a container 1 is performed (still incorporated in the strip 12 of wrapping material bent in a tubular shape) following the continuous movement of the container 1 itself for a certain time, and a subsequent return stroke, along which no processing is performed and the movable part 19 is returned to the initial position to begin the processing of the next container 1.

In the area in front of the movable part 19, the filling of the containers 1 is performed and therefore the area in front of the movable part 19 is subjected to the presence of the pourable product (which in small quantities can always splash out of the containers 1), to the presence of a sterilizing fluid (for example hydrogen peroxide) with which the sheets 2 of wrapping material can be previously sterilized (in the case of filling with a pourable foodstuff product), and in the presence of pressurized water (optionally added with cleaning agents) with which the forming and filling machine 9 is cyclically washed (for example at each end of the cycle). Whereas, in the area behind the movable part 19 cams (not illustrated) are arranged, engaged by tracking rollers (shown in Figure 6) carried by the movable part 19 and therefore the area behind the movable part 19 is subject to the presence of lubricants (oils and/or fats). For obvious reasons, is needed to avoid that what is present in the area in front of the movable part 19 can contaminate the area behind the movable part 19 and that what is present in the area behind the movable part 19 can contaminate the area in front of the movable part 19. Accordingly, at a rear edge of a rear face of the movable part 19 a sealing device 20 (illustrated in Figure 6) is arranged, having the function of preventing the exchange of fluid (i.e. the passage of fluid) between the area in front of the movable part 19 and the area behind the movable part 19.

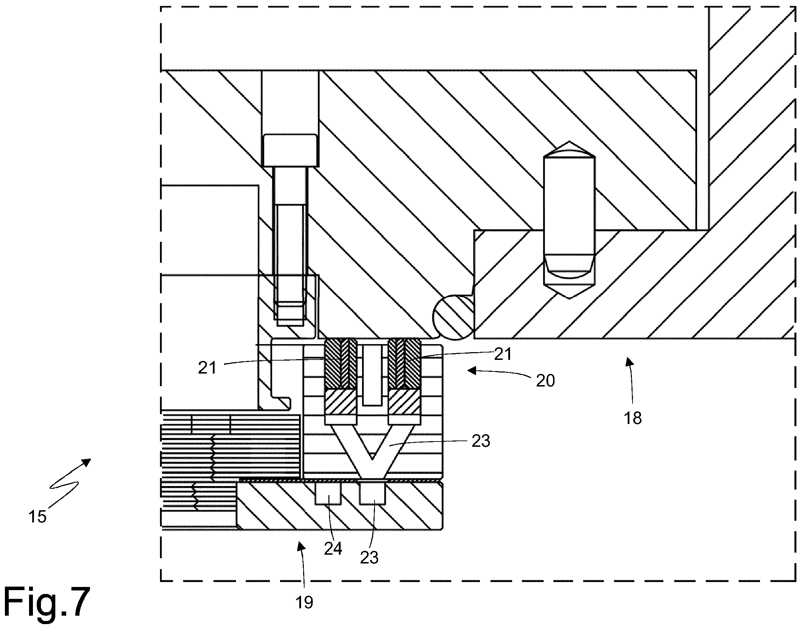

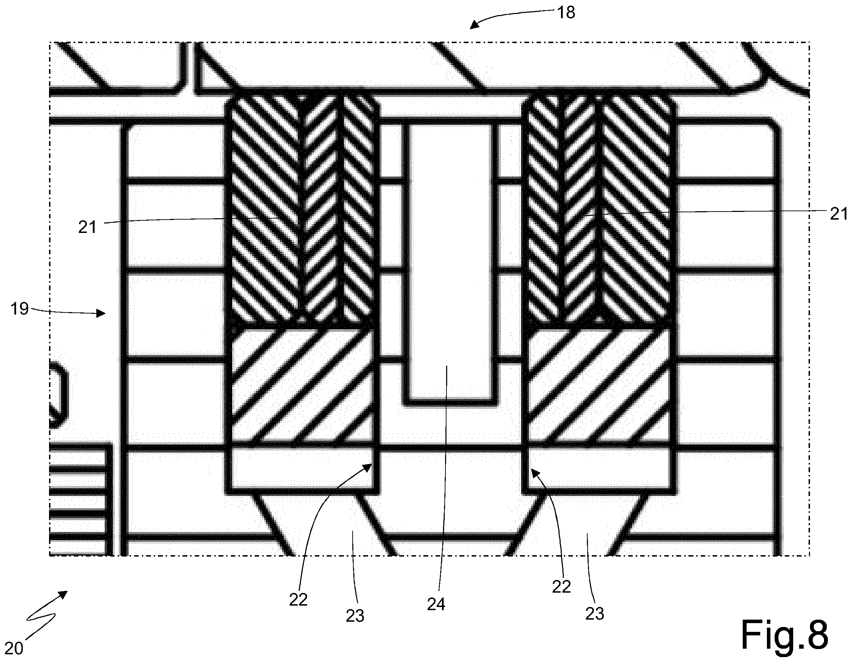

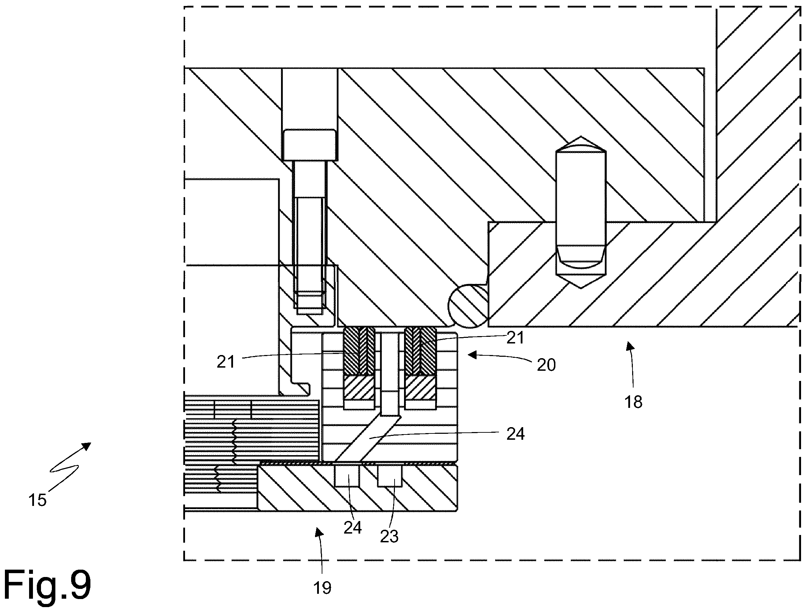

According to what is illustrated in Figures 7, 8 and 9, the sealing device 20 is interposed between the fixed part 18 and the part 19 and comprises two elastic gaskets 21 adjacent to each other and two seats 22, each of which is obtained in the movable part 19 and houses a portion of a corresponding elastic gasket 21 which partially projects out of the seat 22 itself and protrudes towards the fixed part 18 leaning against the fixed part 18 itself. Each seat 22 houses the corresponding elastic gasket 21 in a sliding manner to allow a sliding of the elastic gasket 21 inside the seat 22 itself. Moreover, the sealing device 20 comprises a supplying member 23 (in Figures 7, 8 and 9 only the terminal conduit of the supplying member 23 is shown) to supply, when needed, compressed air under pressure into each seat 22 and behind the corresponding elastic gasket 21, so as to pneumatically push the elastic gasket 21 out of the seat 22 and, hence, press the elastic gasket 21 against the fixed part 18.

In the preferred embodiment illustrated in the accompanying figure, the sealing device 20 comprises two separate and independent gaskets 21 which are housed in two corresponding seats 22 arranged at a given distance from one another; according to a different embodiment not illustrated, the sealing device 20 comprises a single gasket 21.

According to a possible but non-binding embodiment, the supplying member 23 comprises a pressure regulator which is adapt for varying the intensity of the pressure of the compressed air being supplied into the seats 22. In use, the pressure regulator adjusts the pressure of the compressed air to a first value during the normal operation, and adjusts the pressure of the compressed air to a second value, greater than the first value during cleaning with the machine in standstill; for example during the normal operation in which the movable part 19 slides at a high speed relative to the fixed part 18, the pressure of the compressed air supplied by the supplying member 23 could be equal to 0.5-1.5 bar, whereas during cleaning with the machine in standstill (i.e. when the movable part 19 does not move relative to the fixed part 18) the pressure of the compressed air supplied by the supplying member 23 could be equal to 3-8 bar to guarantee an optimal sealing.

According to a possible but non-binding embodiment, the sealing device 20 comprises a further supplying member 24 (in Figures 7, 8 and 9 only the end conduit of the supplying member 24 is shown) to supply, when needed, compressed air under pressure between the two seats 22; said compressed air must necessarily flow outwards, causing an air flow which moves away from both the gaskets 21 and therefore pushes the fluids away from the gaskets 21 themselves.

According to a preferred (but not binding) embodiment, each seat 22, therefore each gasket 21, has an open spiral-like shape having an overlapping area in which an end of the seat 22 (hence of the corresponding gasket 21) is parallel and offset relative to the opposite end of the seat 22 (therefore of the corresponding gasket 21); furthermore, each seat 22, at room temperature, is longer than the corresponding gasket 21 to allow a thermal expansion in length of the gasket 21 itself (the seat 22 is made of metal and with the temperature increase expands less than the gasket 21 which it is made of plastic material). Preferably, the overlapping area of a seat 22 (therefore of a gasket 21) is opposite to the overlapping area of the other seat 22 (and therefore of the other gasket 21).

In the embodiment illustrated in the accompanying figures, the seats 22 are obtained in the movable part 19 and therefore the gaskets 21 press against the fixed part 18; according to an alternative and perfectly equivalent embodiment, the seats 22 are obtained in the fixed part 18 and therefore the gaskets 21 press against the movable part 19.

The sealing device 20 described above ensures an excellent seal and above all guarantees a very long service life before proceeding with the replacement of the gaskets 21: in fact, as the gaskets 21 wear out (i.e. they become worn by sliding on the fixed part 18), the wear is automatically compensated by the sliding of the gaskets 21 inside the corresponding seats 22. In this way it is ensured that the pressure exerted by the gaskets 21 against the fixed part 18 is constant throughout the (long) life of the gaskets 21 and dependent on the pressure of the compressed air supplied by the supplying member 23.

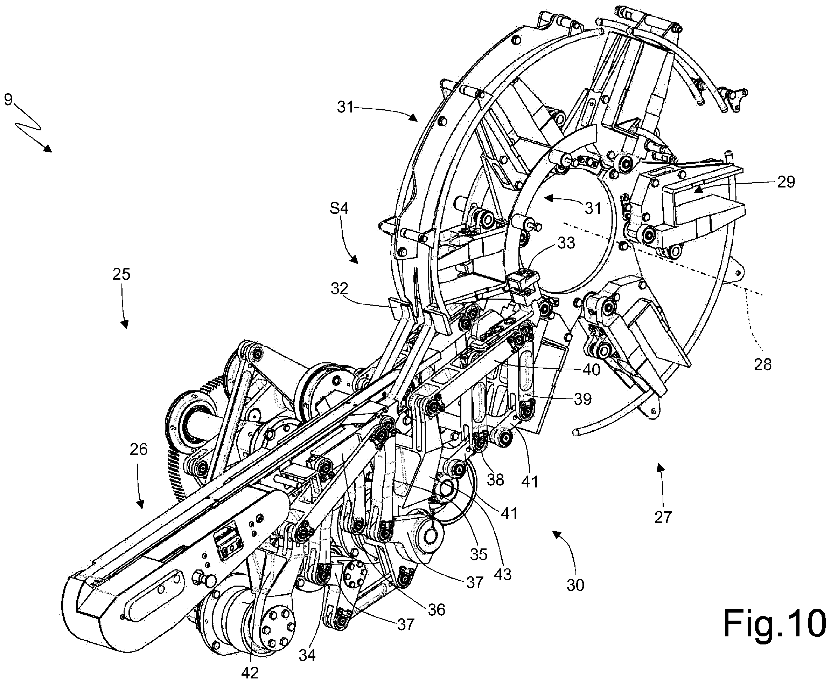

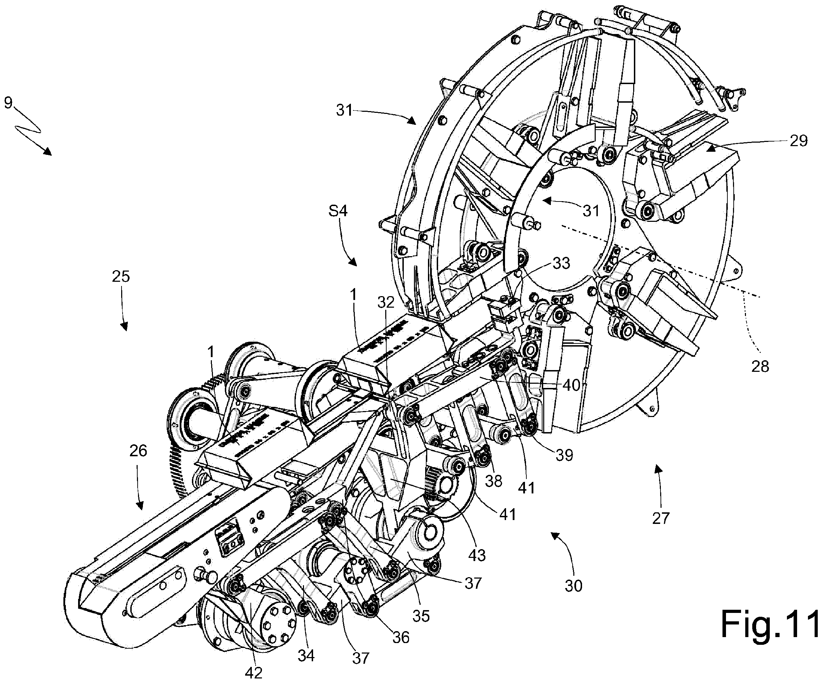

As illustrated in Figure 10, once the closure of a container 1 has been completed by means of the three seals (the longitudinal seal 6 and the two cross seals 7), the container 1 is completely released from the strip 12 of wrapping material (at the same time, the cross cutting of the strip 12 of wrapping material also occurs with the two cross seals 7) and is taken over by a belt transfer conveyor 25. The belt transfer conveyor 25 has a plurality of pockets 26 which are cyclically fed with constant motion (i.e. with a motion law which provides a continuous movement without pauses) along a linear transfer path which is arranged inclined upwards relative to the horizontal direction. The transfer conveyor 25 comprises a conveyor belt which is closed in a loop and is provided with teeth (partially shown in Figures 11-15), which rise perpendicularly from the conveyor belt and define the pockets 26 of the transfer conveyor 25 between one another; in particular, each pocket 26 of the transfer conveyor 25 has a single tooth which is arranged behind the pocket 26 and pushes a corresponding container 1 along the transfer path while the container 1 rests against the conveyor belt.

Downstream of the transfer conveyor 25 a folding drum 27 is provided, which is arranged vertically, rotates stepwise (i.e. with intermittent motion composed of a continuous interleaving of stopping and moving steps) around a horizontal rotation axis 28 and supports a plurality of radially oriented peripheral pockets 29. At a feeding station S4, each container 1 is fed from a pocket 26 of the transfer conveyor 25 to a pocket 29 of the folding drum 27 by the action of a feeding and folding device 30.

The pockets 26 are fed with constant motion along the transfer path, whereas the pockets 29 are fed with intermittent motion by the folding drum 27; in order to avoid interference in the feeding station S4 between the container 1 carried by a pocket 26 and the container 1 carried by the subsequent pocket 26, the pockets 26 are spaced apart one from the other, i.e. each pocket 26 is arranged at a given distance (clearly illustrated in the Figure 11) from the next pocket 26. In other words, between a tooth of the transfer conveyor 25 and the next tooth there is a distance greater than the corresponding dimension of the container 1 so that there is a given distance between two successive containers 1 fed by the transfer conveyor 25.

It is important to note that the transfer conveyor 25 terminates at a given distance from the folding drum 27, since the insertion of the containers 1 into the pockets 29 of the folding drum 27 is performed by the feeding and folding device 30 and not by the transfer conveyor 25.

The transfer conveyor 25 receives each container 1 from the processing conveyor 13 with the cross sealing fins 7 and with the triangular wings 8 in the original position (i.e. the cross sealing fins 7 are perpendicular to the corresponding bottom walls 4 and 5 and triangular wings 8 are coplanar with the bottom walls 4 and 5). As better described hereinafter, the cross sealing fins 7 are folded against the corresponding bottom walls 4 and 5 by 90° by the feeding and folding device 30 during feeding of the container 1 from the pocket 26 of the transfer conveyor 25 to the pocket 29 of the folding drum 27; instead, the triangular wings 8 of the bottom walls 4 and 5 are folded against the respective side walls 3 by 90° and/or are folded against the respective bottom walls 4 and 5 by 180° while the container 1 is fed by the folding drum 27. In other words, the feeding and folding device 30 picks up each container 1 from a pocket 26 of the transfer conveyor 25, inserts the container 1 into a pocket 29 of the folding drum 27, and folds the sealing fins of the cross seals 7 against the respective bottom walls 4 and 5 of the container 1 by 90°.

Furthermore, the folding drum 27 is provided with folding members 31 (of a known type) to fold the triangular wings 8 of the bottom walls 4 and 5 against the respective side walls 3 and/or against the respective bottom walls 4 and 5; the folding members 31 are also coupled to sealing members (of a known type) for heat sealing the triangular wings 8 of the bottom walls 4 and 5 to the corresponding lateral walls 3 of the container 1 or to the corresponding bottom walls 4 and 5. The feeding and folding device 30 comprises a pusher 32 adapt for engaging the upper bottom wall 5 of the container 1 and a counter-pusher 33 adapt for engaging the lower bottom wall 4 of the container 1 opposite the upper bottom wall 5; alternatively, the container could have an opposite orientation according to which the pusher 32 engages the lower bottom wall 4 of the container 1 and the counter-pusher 33 engages the upper bottom wall 5 of the container 1. As better described in the following, the pusher 32 and the counter-pusher 33 engage the respective sealing fins of the cross seals 7 causing the 90° folding of the sealing fins against the bottom walls 4 and 5.

According to a preferred embodiment, the pusher 32 and the counter-pusher 33 are shaped like a fork and embrace the transfer conveyor 25 and the folding drum 27 from opposite sides; in other words, the transfer conveyor 25 and the folding drum 27 are narrower than the containers 1 and therefore engage only a central part of the containers 1 leaving the two side parts of the containers 1 free, which are instead engaged by the pusher 32 and by the counter-pusher 33 which are shaped like a fork and are wider than the transfer conveyor 25 and the folding drum 27.

According to a preferred embodiment, the pusher 32 and the counter-pusher 33 are movable relative to the container 1 both in a direction parallel to the bottom walls 4 and 5 (i.e. parallel to the transfer path), and in a direction perpendicular to the bottom walls 4 and 5 (i.e. perpendicular to the transfer path). In particular, the pusher 32 and the counter-pusher 33 rest against the corresponding bottom walls 4 and 5 of the container 1 with an approaching movement that has a motion component perpendicular to the bottom walls 4 and 5; moreover, the pusher 32 and the counter-pusher 33 can have a motion component parallel to the bottom walls 4 and 5 which can alternatively have a first direction for folding the sealing fins against the corresponding bottom wall 4 or 5 of the container 1 by 90° in a first direction or a second direction opposite the first direction for folding the sealing fins against the corresponding bottom wall 4 or 5 of the container 1 by 90° in a second direction opposite to the first way.

The pusher 32 moves cyclically along a feeding path closed in a loop and having an operating section, along which the pusher 32 is arranged at the level of the transfer conveyor 25 (i.e. engages a container 1 which is in the transfer conveyor 25) and a return section, along which the pusher 32 is arranged under the transfer conveyor 25 (i.e. does not engage a container 1 which is in the transfer conveyor 25); in the return section, the pusher 32 must lower under the transfer conveyor 25 to return behind the next container 1 and then rise back up to the level of the transfer conveyor 25 only after reaching a position behind the next container 1. The counter-pusher also moves cyclically along a feeding path closed in a loop, but, unlike the pusher 32, the counter-pusher always remains at the level of the transfer conveyor 25 since it does not have to pass under the next container 1 in the return section.

To engage the container 1 in the pocket 26 of the transfer conveyor 25, the pusher 32 and the counter-pusher 33 perform respective movements in opposite directions, so as to clamp the container 1 between them; in other words, the pusher 32 and the counter-pusher 33 are initially wider (along the transfer path) of the container 1 and tighten around the container 1, approaching each other to clamp the container 1 itself.

According to a preferred but not limiting embodiment illustrated in Figure 10, the feeding and folding device 30 comprises an articulated quadrilateral having two rocker arms 34 and 35 and a connecting rod 36 which is hinged to the rocker arms 34 and 35 and supports the pusher 32. Furthermore, the feeding and folding device 30 comprises a pair of arms 37, each of which is hinged to a fixed frame and supports an end of a corresponding rocker arm 34 and 35 of the articulated quadrilateral on the opposite side relative to the connecting rod 36; the two arms 37 are mutually interconnected to rotate with each other in a perfectly synchronous manner.

According to a preferred but not limiting embodiment illustrated in Figure 10, the feeding and folding device 30 comprises an articulated quadrilateral having two rocker arms 38 and 39 and a connecting rod 40 which is hinged to the rocker arms 38 and 39 and supports the counter-pusher 33. Moreover, the feeding and folding device 30 comprises a pair of arms 41, each of which is hinged to the fixed frame and supports an end of a corresponding rocker arm 38 and 39 of the articulated quadrilateral on the opposite side relative to the connecting rod 40; the two arms 41 are interconnected to rotate with each other in a perfectly synchronous manner.

To the connecting rod 36 of the articulated quadrilateral, which supports the pusher 32 an actuating arm 42 is connected, in the rear part, which is angularly integral with a cam actuating system (not illustrated) and imparts the cyclical movement to the articulated quadrilateral. Likewise, to the connecting rod 40 of the articulated quadrilateral that supports the counter-pusher 33 an actuating arm 43 is connected, in the rear part, which is angularly integral with a cam actuating system (not illustrated) and imparts the cyclical movement to the articulated quadrilateral. The arms 37 and 41 also receive movement from respective cam actuating systems (not illustrated).

In particular, the articulated quadrilaterals actuated by the actuation arms 42 and 43 impart, to the pusher 32 and to the counter-pusher 33, a substantially (but not completely) movement parallel to the transfer path of the transfer conveyor 25; instead, the arms 37 and 41 impart, to the pusher 32 and to the counter-pusher 33, a substantially (but not completely) movement perpendicular to the transfer path of the transfer conveyor 25.

With reference to Figures 11-15, the operation of the feeding and folding device 30 for picking up a container 1 from a pocket 26 of the transfer conveyor 25 and for inserting the container 1 itself into a pocket 29 of the folding drum 27 thus folding at the same time the sealing fins of the cross seals 7 against the respective bottom walls 4 and 5 is described in the following.

As illustrated in Figure 11, initially the pusher 32 is arranged under the transfer conveyor 25 (therefore under the container 1) and in the vicinity of the upper bottom wall 5 of the container 1 whereas the counter-pusher 33 is arranged at the same level of the transfer conveyor 25 (thus at the same level as the container 1) and at a given distance from the lower bottom wall 4 of the container 1. At this step, the container 1 is still engaged by the pocket 26 of the transfer conveyor 25 and both the sealing fins of the cross seals 7 are still in their original position, i.e. they are perpendicular to the corresponding bottom walls 4 and 5 of the container 1.

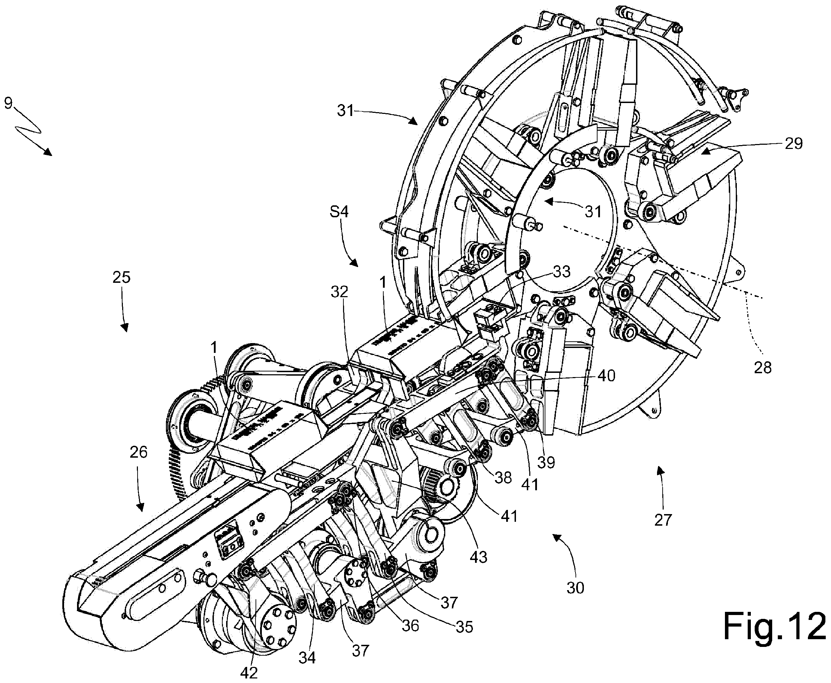

As illustrated in Figure 12, then the pusher 32 moves to the same level as the transfer conveyor 25 (therefore at the same level as the container 1) and engages the upper bottom wall 5 of the container 1 while the counter-pusher 33 is arranged at the same level of the transfer conveyor 25 (therefore at the same level as the container 1) and at a given distance from the lower bottom wall 4 of the container 1. At this step, the container 1 is still engaged by the pocket 26 of the transfer conveyor 25 and both the sealing fins of the cross seals 7 are still in their original position, i.e. they are perpendicular to the corresponding bottom walls 4 and 5 of the container 1.

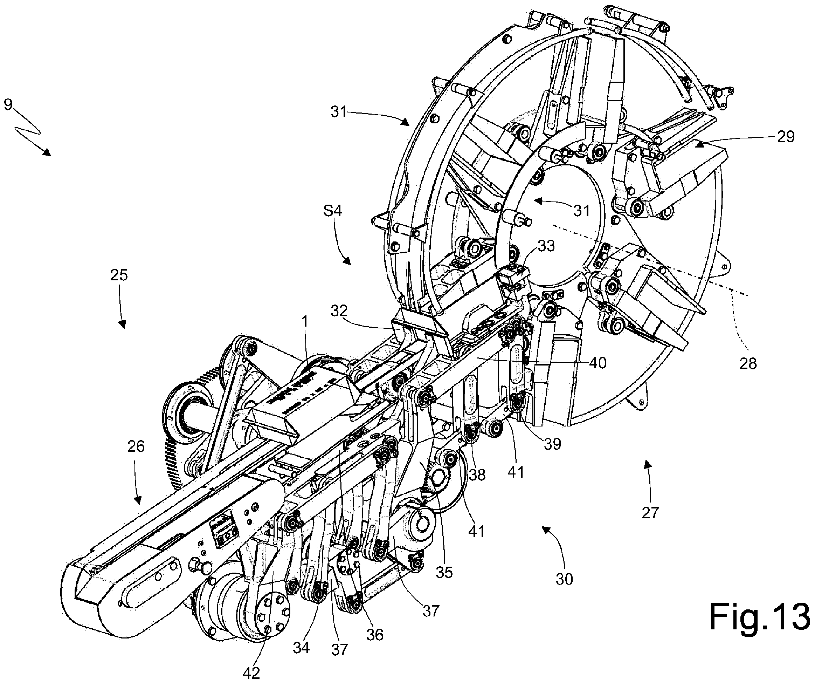

As illustrated in Figure 13, then the pusher 32 pushes the upper bottom wall 5 of the container 1 by removing the container 1 from the pocket 26 of the transfer conveyor 25 (i.e. bringing the container 1 ahead of the tooth of the corresponding pocket 26) and, at same time, the counter-pusher 33 approaches the pusher 32 until it engages the lower bottom wall 4 of the container 1 and then clamping the container 1 with the pusher 32 (immediately thereafter, the tooth of the pocket 26 of the transfer conveyor 25 *"disappears"* as it arrives at the end of its work stroke); the joint movement of the pusher 32 and of the counter-pusher 33 completes the insertion of the container 1 into the pocket 29 of the folding drum 27. In this step, the container 1 is engaged by the pocket 29 of the folding drum 27 which is still in the transfer station S4 and both the sealing fins of the cross seals 7 are still in the original position, i.e. they are perpendicular to the corresponding bottom walls 4 and 5 of the container 1.

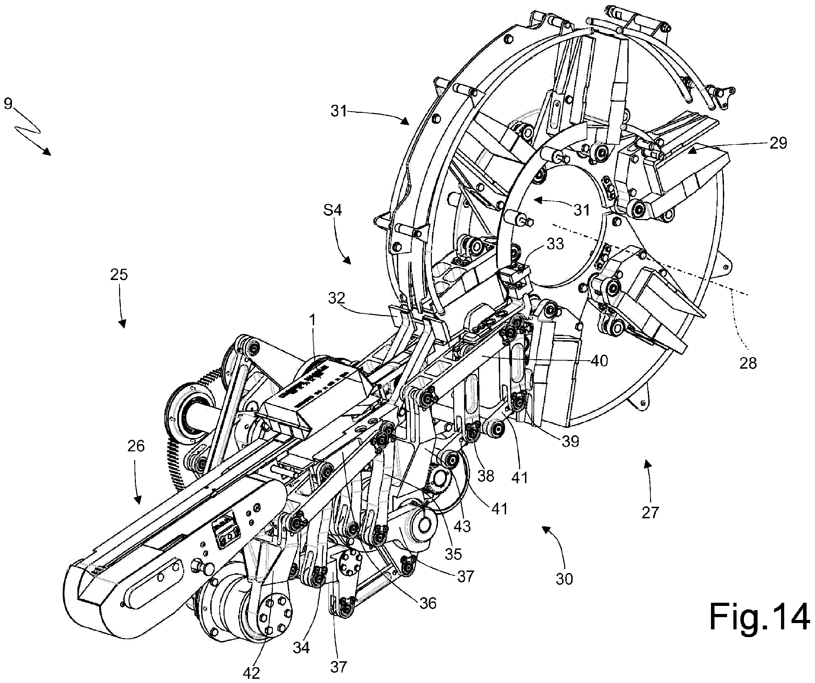

As illustrated in Figure 14, when the container 1 is completely inserted into the pocket 29 of the folding drum 27, the pusher 32 moves upwards causing the folding by 90° of the sealing fin of the cross seal 7 of the upper bottom wall 5 of the container 1 against the bottom wall 5 itself. In this step, the container 1 is engaged by the seat 29 of the folding drum 27 which is still in the transfer station S4, the sealing fin of the cross seal 7 of the upper bottom wall 5 of the container 1 is folded against the upper bottom wall 5 itself, and the sealing fin of the cross seal 7 of the lower bottom wall 4 of the container 1 is perpendicular to the lower bottom wall 4 itself.

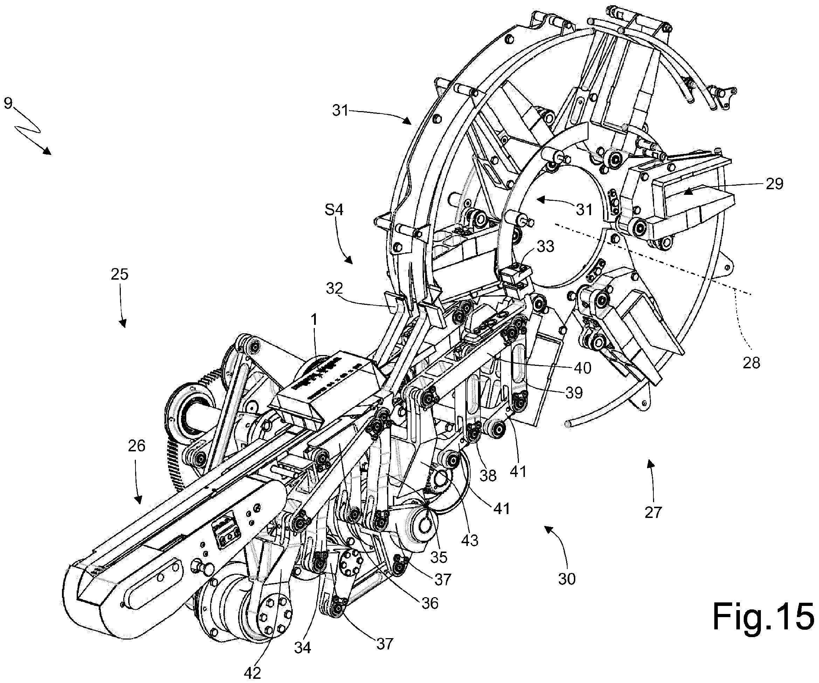

As illustrated in Figure 15, the folding drum 27 subsequently performs a feeding step; the relative movement between the container 1 carried by the seat 29 of the folding drum 27 and the counter-pusher 33 which remains stationary causes the folding by 90° of the sealing fin of the cross seal 7 of the lower bottom wall 4 of the container 1 against the lower bottom wall 4 itself. In this step, the container 1 is engaged by the seat 29 of the folding drum 27 which has moved away from the transfer station S4 and both sealing fins of the cross seals 7 are folded against the corresponding bottom walls 4 and 5.

In the embodiment illustrated in the accompanying figures, the counter-pusher 33 is "C" shaped having an empty part in the centre at which the sealing fin of the cross seal 7 of the lower bottom wall 4 of the container 1 is inserted so that the sealing fin itself remains perpendicular to the lower bottom wall 4 until the pocket 29 of the folding drum 27 moves away from the transfer station S4. According to an alternative embodiment not illustrated, the counter-pusher 33 is not "C" shaped and the folding of the sealing fin of the cross seal 7 of the lower bottom wall 4 of the container 1 takes place as soon as the counter-pusher 33 rests against the lower bottom wall 4 or takes place simultaneously with the folding of the sealing fin of the cross seal 7 of the upper bottom wall 5 of the container 1.

The above-described forming and filling machine 9 allows to achieve a high operating speed (measured as number of containers 1 produced in the time unit) while maintaining a high bending quality, i.e. an extreme spatial precision in the bending and sealing operations (said extreme spatial precision is needed in order not to compromise the appearance of the more or less coloured prints at the areas in which different parts of the wrapping sheet 2, that was printed when it was completely extended are flanked).

## Claims

1. A machine (9) for forming and filling a container (1) for pourable products; the forming and filling machine (9) comprises:
a fixed part (18);
a movable part (19), which, in use, moves relative to the fixed part (18) and is arranged so as to face the fixed part (18); and
a sealing device (20), which is interposed between the fixed part (18) and the movable part (19) so as to prevent the passage of fluid and comprises at least one elastic gasket (21) and a seat (22) which is obtained in the fixed or movable part (19; 18) and houses a portion of the elastic gasket (21),
which partially projects out of the seat (22) and protrudes towards the movable or fixed part (18; 19), resting against the movable or fixed part (18; 19);
the forming and filling machine (9) is **characterized in that:**
the seat (22) houses the elastic gasket (21) in a sliding manner, so as to allow the elastic gasket (21) to slide inside the seat (22); and
the sealing device (20) comprises a first supplying member (23) for supplying, when needed, compressed air under pressure into the seat (22) and behind the elastic gasket (21), so as to pneumatically push the elastic gasket (21) out of the seat (22) and, hence, press the elastic gasket (21) against the movable or fixed part (18; 19).

2. The forming and filling machine (9) according to claim 1, wherein the first supplying member (23) comprises a pressure regulator, which is adapt for varying the intensity of the pressure of the compressed air supplied into the seat (22), adjusting the pressure of the compressed air to a first value during the normal operation, and adjusting the pressure of the compressed air to a second value, greater than the first value during cleaning with the automatic machine (9) in standstill.

3. The forming and filling machine (9) according to claim 1 or 2, wherein the sealing device (20) comprises:
two separate and independent gaskets (21), which are housed in two corresponding seats (22) arranged at a given distance from one another; and
a second supplying member (24) for supplying, when needed, compressed air under pressure between the two seats (22).

4. The forming and filling machine (9) according to any of the claims from 1 to 3 and comprising:
a processing conveyor (13), which feeds a strip (12) of wrapping material through a bending station (S1), in which the strip (12) of wrapping material is bent in a tubular shape and is provided with a longitudinal seal (6), through a filling station (S2), in which a product dose is fed into the strip (12) of wrapping material bent in a tubular shape, and through a sealing station (S3) in which the strip (12) of wrapping material bent in a tubular shape is provided with two opposite cross seals (7) each forming a sealing fin to define the container (1) which, at the same time or later, is separated from the strip (12) of wrapping material by means of a cross cut;
a frame making up the fixed part (18) and supporting a pair of tracks;
a slide making up the movable part (19) and cyclically sliding back and forth along the pair of tracks; and
a sealing device which makes the cross seals (7) and is mounted on the slide.

## Patentansprüche

1. Maschine (9) zum Formen und Füllen eines Behälters (1) für fließfähige Produkte; die Form- und Füllmaschine (9) umfasst:
einen festen Teil (18);
einen beweglichen Teil (19), der sich im Gebrauch bezogen auf den festen Teil (18) bewegt und so angeordnet ist, dass er dem festen Teil (18) gegenüberliegt; und
eine Versiegelungsvorrichtung (20), die zwischen dem festen Teil (18) und dem beweglichen Teil (19) eingefügt ist, um den Durchtritt von Fluid zu verhindern, und mindestens eine elastische Dichtung (21) und eine Aufnahme (22) umfasst, die in dem festen oder beweglichen Teil (19;18) erhalten ist und einen Abschnitt der elastischen Dichtung (21) aufnimmt, die teilweise aus der Aufnahme (22) hervorsteht und in Richtung des beweglichen oder festen Teils (18; 19) absteht, wobei sie an dem beweglichen oder festen Teil (18; 19) anliegt;
die Form- und Füllmaschine (9) ist **dadurch gekennzeichnet, dass**: die Aufnahme (22) die elastische Dichtung (21) gleitend aufnimmt, um es der elastischen Dichtung (21) zu gestatten, innerhalb der Aufnahme (22) zu gleiten; und
die Versiegelungsvorrichtung (20) ein erstes Einspeisungselement (23) zur Einspeisung, bei Bedarf, von unter Druck stehender Druckluft in die Aufnahme (22) und hinter die elastische Dichtung (21) umfasst, um die elastische Dichtung (21) pneumatisch aus der Aufnahme (22) zu drücken und somit die elastische Dichtung (21) gegen den beweglichen oder festen Teil (18; 19) zu pressen.

2. Form- und Füllmaschine (9) nach Anspruch 1, wobei das erste Zuführungselement (23) einen Druckregler umfasst, der zur Änderung der Intensität des Drucks der Druckluft, die in die Aufnahme (22) eingespeist wird, Einstellung des Drucks der Druckluft auf einen ersten Wert während des Normalbetriebs und Einstellung des Drucks der Druckluft auf einen zweiten Wert, der größer als der erste Wert ist, beim Reinigen, wobei sich die automatische Maschine (9) im Stillstand befindet, geeignet ist.

3. Form- und Füllmaschine (9) nach Anspruch 1 oder 2, wobei die Dichtungsvorrichtung (20) Folgendes umfasst:
zwei getrennte und unabhängige Dichtungen (21), die in zwei entsprechenden Aufnahmen (22) aufgenommen sind, die in einem bestimmten Abstand zueinander angeordnet sind; und
ein zweites Einspeisungselement (24), zur Einspeisung, bei Bedarf, von unter Druck stehender Druckluft zwischen die zwei Aufnahmen (22).

4. Form- und Füllmaschine (9) nach einem der Ansprüche 1 bis 3, und umfassend:
einen Verarbeitungsförderer (13), der einen Streifen (12) von Verpackungsmaterial durch eine Biegestation (S1), in welcher der Streifen (12) von Verpackungsmaterial in eine röhrenartige Form gebogen und mit einer Längsversiegelung (6) versehen wird, durch eine Füllstation (S2), in welcher eine Produktdosis in den Streifen (12) von Verpackungsmaterial eingegeben wird, der in eine röhrenartige Form gebogen ist, und durch eine Versiegelungsstation (S3) führt, in welcher der Streifen (12) von Verpackungsmaterial, der in eine röhrenartige Form gebogen ist, mit zwei gegenüberliegenden Querversiegelungen (7) versehen wird, die jeweils eine Versiegelungsfinne bilden, um den Behälter (1) zu definieren, der gleichzeitig oder später mittels eines Querschnitts von dem Streifen (12) von Verpackungsmaterial getrennt wird;
einen Rahmen, der den festen Teil (18) bildet und eine Paar Schienen trägt;
einen Schlitten, der den beweglichen Teil (19) bildet und zyklisch entlang dem Paar Schienen vor- und zurückgleitet; und
eine Versiegelungsvorrichtung, welche die Querversiegelungen (7) schafft und an dem Schlitten befestigt ist.

## Revendications

1. Machine (9) pour former et remplir un récipient (1) pour produits versables ; la machine de formation et de remplissage (9) comprenant :
une pièce fixe (18) ;
une pièce mobile (19) qui, lors de l'utilisation, se déplace par rapport à la pièce fixe (18) et est disposée de sorte à faire face à la pièce fixe (18) ; et
un dispositif d'étanchéité (20) qui est interposé entre la pièce fixe (18) et la pièce mobile (19) de sorte à empêcher le passage de fluide et qui comprend au moins un joint élastique (21) et un siège (22) qui est obtenu dans la pièce fixe ou mobile (19 ; 18) et accueille une partie du joint élastique (21) qui fait partiellement saillie hors du siège (22) et fait saillie vers la pièce mobile ou fixe (18 ; 19), reposant contre la pièce mobile ou fixe (18 ; 19) ;
la machine de formation et de remplissage (9) étant **caractérisée en ce que** :
le siège (22) accueille le joint élastique (21) de manière coulissante, de sorte à permettre au joint élastique (21) de coulisser à l'intérieur du siège (22) ; et
le dispositif d'étanchéité (20) comprend un premier élément d'alimentation (23) pour fournir, si besoin, de l'air comprimé sous pression dans le siège (22) et derrière le joint élastique (21), de sorte à pousser de manière pneumatique le joint élastique (21) hors du siège (22) et, par conséquent, à appuyer le joint élastique (21) contre la pièce mobile ou fixe (18 ; 19).

2. Machine de formation et de remplissage (9) selon la revendication 1, le premier élément d'alimentation (23) comprenant un régulateur de pression, qui est conçu pour faire varier l'intensité de la pression de l'air comprimé amené dans le siège (22), ajuster la pression de l'air comprimé à une première valeur pendant le fonctionnement normal, et ajuster la pression de l'air comprimé à une seconde valeur, supérieure à la première valeur, pendant le nettoyage avec la machine automatique (9) arrêtée.

3. Machine de formation et de remplissage (9) selon la revendication 1 ou 2, le dispositif d'étanchéité (20) comprenant :
deux joints (21) séparés et indépendants, qui sont logés dans deux sièges (22) correspondants disposés à une distance donnée l'un de l'autre ; et
un second élément d'alimentation (24) pour fournir, si nécessaire, de l'air comprimé sous pression entre les deux sièges (22).

4. Machine de formation et de remplissage (9) selon l'une quelconque des revendications de 1 à 3 et comprenant :
un convoyeur de traitement (13), qui achemine une bande (12) de matériau d'emballage à travers une station de pliage (S1), dans laquelle la bande (12) de matériau d'emballage est pliée dans une forme tubulaire et est dotée d'un joint longitudinal (6), à travers une station de remplissage (S2), dans laquelle une dose de produit est introduite dans la bande (12) de matériau d'emballage pliée dans une forme tubulaire, et à travers une station d'étanchéité (S3) dans laquelle la bande (12) de matériau d'emballage pliée dans une forme tubulaire est dotée de deux joints transversaux (7) opposés, chacun formant une ailette d'étanchéité pour définir le récipient (1) qui, simultanément ou ultérieurement, est séparé de la bande (12) de matériau d'emballage au moyen d'une coupe transversale ;
un cadre constituant la pièce fixe (18) et supportant une paire de rails ;
une glissière constituant la pièce mobile (19) et coulissant cycliquement vers l'avant et vers l'arrière le long de la paire de rails ; et
un dispositif d'étanchéité qui constitue les joints transversaux (7) et qui est monté sur la glissière.
